# EUROPEAN PATENT SPECIFICATION

(11) **EP 3 852 924 B1**
(45) Date of publication and mention of the grant of the patent: **29.03.2023**
(21) Application number: 19766006.1
(22) Date of filing: 06.09.2019
(51) Int. Cl.: B01L 3/00, F16K 11/085

(54) **DIAGNOSTIC DEVICE**
DIAGNOSEVORRICHTUNG
DISPOSITIF DE DIAGNOSTIC

(30) Priority: 21.09.2018 AU 2018903556
(43) Date of publication of application: 28.07.2021
(73) Proprietor: Motherson Innovations Company Limited, London EC2N 2AX (GB)
(72) Inventor: GROCHOWSKI, Alex, Lonsdale, South Australia 5160 (AU); DI FIORE, Adam, Underdale, South Australia 5032 (AU); FIMERI, Garry Gordon Leslie, Morphett Vale, South Australia 5162 (AU); BELCHER, Simon, South Plympton, South Australia 5038 (AU)
(74) Representative: Weber-Bruls, Dorothée
(86) International application number: PCT/EP2019/073905
(87) International publication number: WO 2020/058007

(56) References cited:
- US-A- 3 913 790
- US-A1- 2003 012 694
- US-A1- 2003 206 829
- US-A1- 2005 163 660
- US-A1- 2012 264 114
- US-A1- 2013 291 659

## Description

### TECHNICAL FIELD

The present disclosure relates to a diagnostic device. In a particular form the present disclosure relates to a diagnostic device for determining the presence of an analyte in a fluid sample according to the preamble of claim 1.

### BACKGROUND

Microfluidic devices are used to process small volumes of fluids in many application areas, such as biochemical assays, biochemical sensors, life science research, and chemical reactions. For example, some biomedical assays make use of microfluidics and microscopy to determine the presence of relevant biomarkers (such as molecules or cells) within a fluid sample.

The use of microfluidic devices generally requires a fluid sample and/or other fluids to be introduced into the microfeatures of a microfluidic chip. This is normally achieved using channels, valves, pumps, and/or reservoirs for storing fluids and routing fluids to and from various external fluid sources. Handling of fluids in these settings can be difficult, particularly in a high-throughput environment such as a pathology laboratory.

In some instances, before a fluid sample is analysed under a microscope, it may be required to undergo preprocessing, such as the application of a reagent to improve the visualisation or detection of the relevant biomarker, or to undergo a separation or concentration process in order to isolate or increase the concentration of the relevant biomarker in the fluid sample.

US 2003/0012694 refers to a disposable unit for single use for the analysis of biological liquids, in particular cell suspensions such as blood, urine, or sperm, with a diluent chamber, a sample dosage device, and a measuring chamber. The sample dosage device has a dosage element into which a dosage capillary is integrated. The dosage element is situated movably in a dosage element chamber in such a manner that one opening of the dosage capillary is connected to a sample loading zone of the disposable unit when the dosage element is in its first position, and when it is in its second position, the diluent chamber and the measuring chamber are connected to one another via the dosage capillary. The measuring chamber has a ventilation valve which is permeable to gas but impermeable to the sample liquid, so that the chamber is completely filled free of any bubbles with the liquid flowing into it.

US 3,913,790 describes a medical testing device for mixing first and second liquids in a preselected ratio and especially adapted for testing the sugar content in urine. The device includes a housing having an outer surface and a chamber therein. First and second liquid inlet passageways extend from the outer surface of the housing and internally thereof and are adapted to receive unmeasured quantities of the first and second liquids. Each of the first and second inlet passageways has an outlet end. A transfer element having two cavities with volumes calibrated proportional to said preselected ratio. The element is movable in the housing between a first position with one of the cavities aligned with each of the outlet ends of the liquid inlet passageways and a second position with the cavities aligned with the housing chamber whereby measured volumes of liquid in the cavities are deposited into the chamber for mixing and testing.

In US 2003/0206829 devices and methods for collecting a fluid specimen and testing it are disclosed that avoid unduly exposing the tester to the specimen and eliminate the possibility of contaminating the remaining portion of the collected fluid, are described. The device includes a first compartment for collecting the fluid and provides controlled volumes of fluid from the first compartment to a second compartment where the fluid is accessible to test strips. Fluid from the first compartment is transferred to the second compartment by use of a fluid metering valve having a valve cylinder with one or more wells formed on the surface of the cylinder. The fluid metering valve is fluidly connected to the first compartment at a first valve position and is fluidly connected to the second compartment at a second valve position.

US 2005/0163660 teaches a disposable liquid specimen collector and testing device, which can be manipulated to distribute a quantified portion of a liquid specimen to separate chromatographic strip-mounting testing stations while shielding the remainder of the specimen from cross-contamination by the immunoassay reagents present in the testing strips. In the resting state, the device exposes the testing station to a desiccant. A separate test station provides for a quick revelation of any adulterating component in the sample specimen. The geometry of the test station and fluid distribution channels assures isobaric conditions throughout the testing areas.

US 2013/0291659 discloses a rapid test device, which includes a cup vessel, which comprises a first chamber and a dosing piston assembling hole communicating with the first chamber; a base fastened at the bottom of the cup vessel; a second chamber, formed between the base and the cup vessel and communicating with the dosing piston assembling hole; a partition, arranged in the second chamber and provided with test paper; a dosing piston, provided with a dosing slot thereon and provided with a key hole at one end, inserted in the dosing piston assembling hole; and a key matching the key hole. In present invention the sample in the dosing slot can be transmitted into the second chamber by rotating the dosing piston. The sample is absorbed by the test paper after flowing by the test paper, and test result appears on the test paper. Since the dosing slot is machined on the dosing piston, the volume of the liquid sample obtained each time is equal and the accuracy of test result is improved. The dosing piston used to obtain the liquid sample is changed from being pushed linearly to being moved rotationally, which makes leakproof effect better.

US 2012/264114 refers to a disposable device comprising all of the reagents necessary for the detection of one or more particles of interest, and which can be incorporated in a detection system including simple means for the automatic management of fluids. For this purpose, the invention relates to a disposable device for the detection of one or more particles of interest present in a liquid sample, said device comprising a substrate provided with: a chamber for capturing the particle(s) of interest to be detected; a fluid channel connecting, upstream, the capture chamber to a buffer solution container, a liquid sample injection means and a container of labelling probes that can be secured to the particle(s) of interest to be detected; and a fluid channel connecting, downstream, the capture chamber to a container for the recovery of liquids which, during use, can flow from the capture chamber.

There is a need for devices that enable relatively easy handling and/or manipulation of fluids for use in microfluidic devices. Alternatively, or in addition, there is a need for devices that enable the relatively simple application of a reagent to a fluid sample in a microfluidic setting. Alternatively, or in addition, there is a need for microfluidic devices that overcome one or more of the fluid handling and/or manipulation problems associated with prior art devices. Alternatively, or in addition, there is a need for improved microfluidic devices.

It is the object of the present disclosure to further develop the known diagnostic device to overcome the drawbacks of the prior art.

### SUMMARY

The object of the present disclosure is achieved by the characterizing features of claim 1. Embodiments thereof are described in claims 2 to 10.

According to a first aspect, there is provided a microfluidic device comprising a first fluid source, at least one covered channel, and a fluid control means configured to transfer a specific volume of fluid from the first fluid source to the or each covered channel.

Further, the device comprises a second fluid source, wherein the fluid control means is also configured to form a conduit between the second fluid source and the or each channel.

In one form, the fluid control means comprises a fluid control valve.

In one form, the fluid control valve has a generally cylindrical body.

In one form, the control valve is received within a generally cylindrical valve bore in the device.

In one form, the control valve further comprises a machine interface for transferring rotational movement from a machine to the valve.

In one form, the valve bore is in fluid communication with the first fluid source and the or each channel.

In one form, the valve bore is in fluid communication with the second fluid source.

Still further, the device comprises a waste sump in fluid communication with the or each channel.

In one form, the control valve comprises a cup corresponding to the or each channel formed in the generally cylindrical body of the control valve, wherein when the control valve is in a first position, the or each cup is in fluid communication with the first fluid source.

In one form, when the control valve is rotated to a second position, the or each cup is in fluid communication with the or each corresponding microchannel.

In one form, when the control valve is rotated to a third position, the or each cup creates a conduit between the second fluid source and the or each channel such that the second fluid source and the or each channel are in fluid communication.

According to a second aspect, there is provided a diagnostic device for determining the presence of a target analyte in a fluid sample, the diagnostic device comprising a first fluid source in the form of a preparation chamber, at least one microchannel, wherein the or each microchannel comprises a fluid inlet and a fluid outlet and a capture surface for selective capturing the target analyte, and a fluid control means configured to transfer of a specific volume of fluid from the first fluid source to the or each microchannel.

Further, the preparation chamber comprises a fluid inlet, and at least one fluid outlet.

Still further, the preparation chamber comprises a fluid outlet corresponding to the or each channel.

In one form, the cross-sectional area of the preparation chamber reduces from the fluid inlet toward the or each fluid outlet.

In one form, the preparation chamber reduces in cross section down to at least one discrete well in the base of the chamber, corresponding to the fluid inlet of the or each channel, wherein the or each well comprises a fluid outlet.

In addition, the device further comprises a second fluid source in the form of a rinse reservoir, wherein the fluid control means is also configured to form a conduit between the second fluid source and the or each microchannel.

### BRIEF DESCRIPTION OF DRAWINGS

Embodiments of the present invention will be discussed with reference to the accompanying drawings wherein:
- Figure 1: is a top perspective view of a diagnostic device, according to an embodiment;
- Figure 2: is an exploded bottom perspective view of the diagnostic device of Figure 1;
- Figure 3: is a side view of the diagnostic device of Figure 1;
- Figure 4: is a cross-sectional view of the diagnostic device of Figure 1, taken through the line A-A;
- Figure 5: is a top view of the diagnostic device of Figure 1 with the lids removed to reveal internal features of the device;
- Figure 6: is a cross-sectional view of the diagnostic device of Figure 1, taken through the line B-B, with the valve in a first position;
- Figure 7: is a cross-sectional view of the diagnostic device of Figure 1, taken through the line B-B, with the valve in a second position;
- Figure 8: is a cross-sectional view of the diagnostic device of Figure 1, taken through the line B-B with the valve in a third position;
- Figure 9: is a cross-sectional view of the diagnostic device of Figure 1, taken through the line C-C, detailing the vent aperture;
- Figure 10: is a detailed view of Figure 9, detailing the interface between the upper and lower bodies;
- Figure 11: is a top view of a diagnostic device according to an embodiment; and
- Figure 12: is a cross-sectional view of the diagnostic device of Figure 9, taken through the line D-D.

### DESCRIPTION OF EMBODIMENTS

The diagnostic device described below is used to determine the presence of an analyte in a fluid sample. In certain embodiments, the device is configured for use in the bladder cancer detection method described in international patent application WO 2018/187830 A1.

As will be described in greater detail below, the device collects a fluid sample, where it is allowed to settle and incubate with one or more primary reagents before being delivered to a channel where it is allowed to incubate with a functionalised surface configured to selectively capture the analyte with or without one or more secondary reagents, before a controlled rinse of the channel of the channel is performed and fluorescence microscopy is performed to determine the presence of the analyte remaining on the functionalised surface.

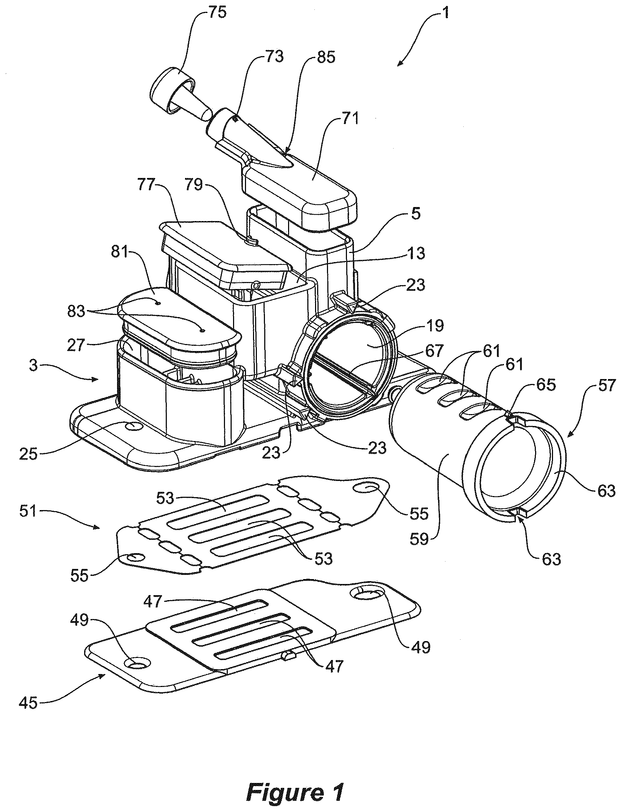

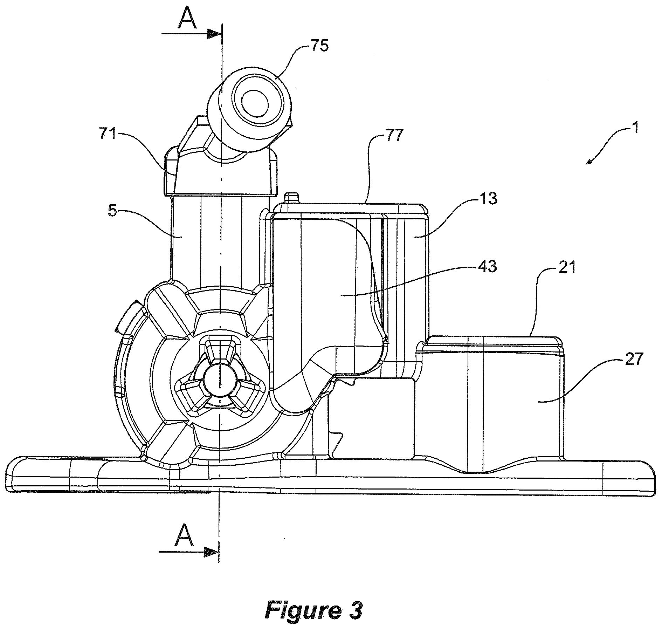

Referring to Figures 1 to 10, there is shown a diagnostic device 1 for determining the presence of an analyte in a fluid sample. The device 1 comprises a first fluid source in the form of a preparation chamber 5 (to be discussed in further detail below), at least one covered channel 31, and a fluid control means in the form of a fluid control valve 57, configured to transfer a specific volume of fluid from the preparation chamber 5 to the or each covered channel 31.

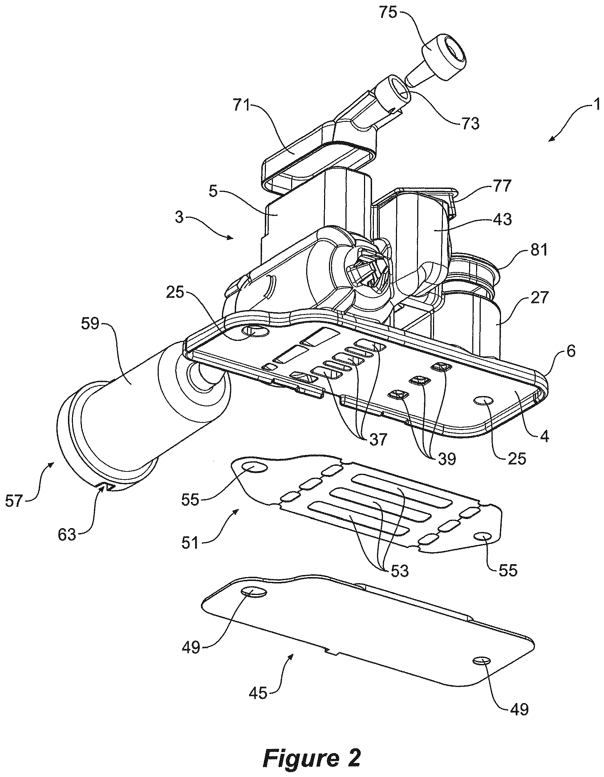

Figures 1 and 2 provide upper and lower exploded perspective views of the diagnostic device 1. It can be seen in this embodiment that the device comprises an upper body 3 and a lower body 45, where the upper body 3 comprises the preparation chamber 5 for receiving and preparing the fluid sample for analysis and a second fluid source, in the form of a rinse reservoir 13 adjacent to the preparation chamber 5 for receiving a rinse solution.

The lower body 45 is in the form of a plate, and comprises three elongate recessed sections 47 which make up the lower part of the covered channels 31, and provide the floor 33 and side-walls for each covered channel 31. The lower body 45 is adhered to the upper body 3 by virtue of an adhesive layer 51, comprising complementary cut-outs 53 for the channels, such that three covered channels 31, are formed between the recessed sections 47 and the upper body 3 when the upper and lower bodies 3, 45 are connected together. While in the embodiment shown, an adhesive layer is used to connect the upper and lower bodies, it will be appreciated that alternative connecting means may also be employed. In alternate embodiments the elongate recessed sections could be incorporated in upper body 3 instead of lower body 45.

As best shown in Figure 1, the upper body 3 comprises a flat lower surface 4 in order to mate with the lower body 45 via the adhesive layer 51, as well as providing a ceiling 35 for each covered channel 31. The upper body 3 also comprises a flange 6 which extends around the perimeter of the lower surface 4, which assists in locating the upper and lower bodies 3, 45 with respect to one another. As can also be seen, the upper body 3 features inlet apertures 37 and outlet apertures 39 which create the inlets and outlets of each of the covered channels 31 respectively, where the inlet apertures 37 connect the channels 31 to the fluid control valve 57 (to be discussed in further detail below) and the outlet apertures 39 connect the channels 31 to a waste sump 27 (to be discussed in further detail below).

Each of the upper and lower bodies 3, 45 and the adhesive layer 51 feature locating holes 25, 49, 55, which, as will be appreciated by a person skilled in the art, may be used with dowels or locating pins to correctly locate and align each of the components with respect to one another during assembly, ensuring that each of the recessed sections 47 formed in the lower body 45 are correctly aligned with their respective inlets and outlets 37, 39 formed in the upper body 3. Locating holes 25, 49, 55 can also be utilised to located the device 1 with respect to a machine.

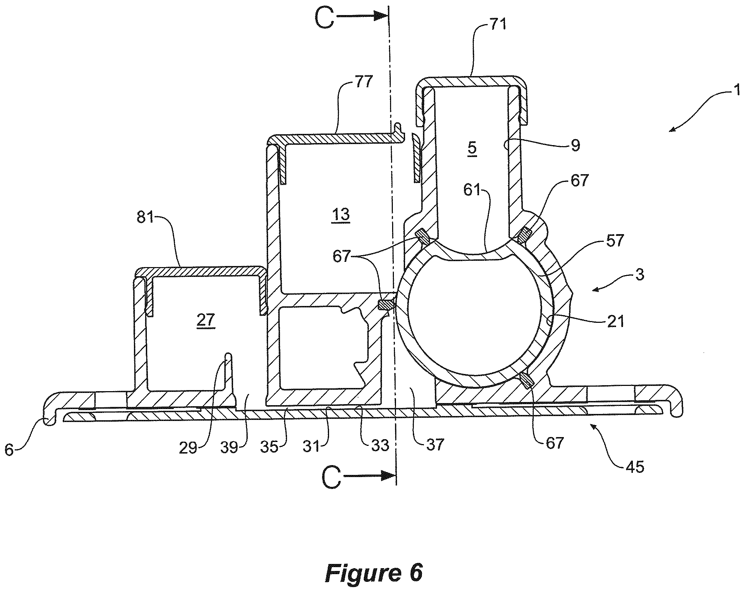

As previously introduced, the upper body 3 features a fluid control means in the form of a fluid control valve 57. The fluid control valve 57 has a generally cylindrical body 59 and is housed within a generally cylindrical valve bore 19 located within the upper body 3. As best shown in Figures 6 to 8, the valve bore 19 is in fluid communication with both the fluid outlets 11 of the preparation chamber 5, the fluid outlets 15 of the rinse reservoir 13 and the fluid inlet 37 of each of the channels 31. A seal member 67 is also disposed within the valve bore 19, in order to create a fluid seal between the control valve 57 and the valve bore 19, ensuring retention of fluid within the preparation chamber 5 and rinse reservoir 13, as well as preventing fluids leaking from the diagnostic device 1 via the valve bore 19. It will be appreciated that other embodiments may feature alternative seal arrangements to the same affect.

The control valve 57 is configured to control fluid transfer between the preparation chamber 5, rinse reservoir 13 and channels 31, and is externally actuable by virtue of a machine interface 63 (best shown in Figures 1 and 2) which allows for the control valve 57 to be rotated by a machine between first, second and third positions (described in further detail below).

It will be appreciated that while the control valve 57 shown is actuable by a machine, alternate embodiments may be directly operated by a user. As best shown in Figure 1 the device may also comprise rotational position markers 23, located on the upper body 3 around the valve bore 19, and a marker 65 on the control valve 57, wherein each rotational position marker 23 on the upper body 3 corresponds to a first second and third position for the control valve 57, such that when the marker 65 on the control valve 57 is aligned with a rotational position marker 23, the rotational position of the control valve 57 is able to be ascertained.

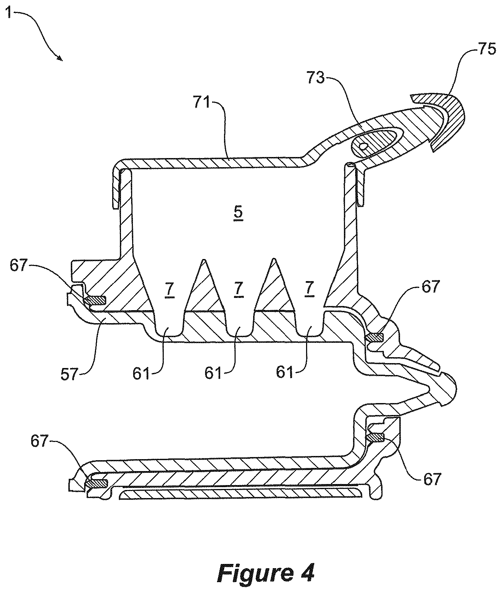

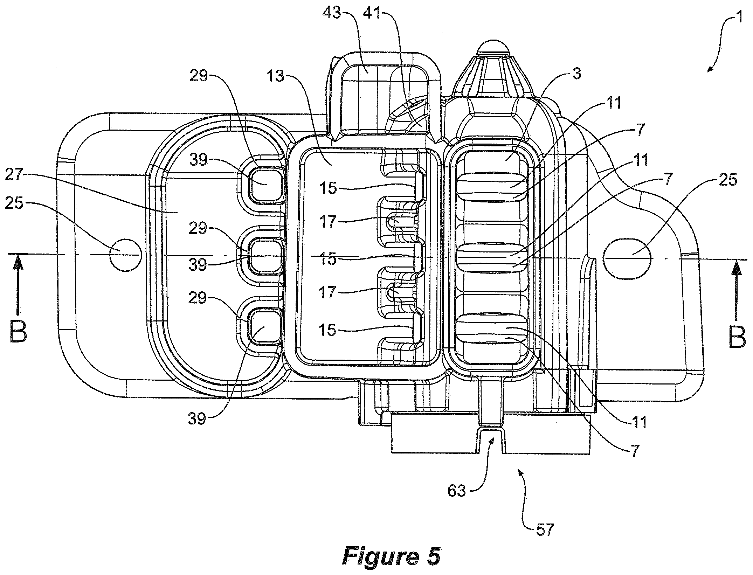

With reference to Figures 4 and 5, it can be seen that the preparation chamber 5 reduces in cross section down to three discrete wells 7 in the base of the chamber 5, wherein each well 7 comprises a fluid outlet 11 in fluid communication with the valve bore 19.

The control valve 57 comprises three dosing cups 61 (corresponding to each channel) recessed into the outer surface of its generally cylindrical body 59, whereas it can be seen in Figures 4 and 6, when the control valve is in a first position, each dosing cup 61 aligns with a corresponding fluid outlet 11 in the base of the preparation chamber 5. It will be appreciated that when a fluid sample is delivered to the preparation chamber 5, each dosing cup 61 will fill with a portion of the fluid sample. The reduction in cross section of the preparation chamber 5 and the wells 7 in the base of the chamber 5 encourage sediment to concentrate in each of the dosing cups 61, increasing the likelihood of analyte collection in each dosing cup 61. It will be appreciated that while the control valve 57 is in the first position, the seal 67 between the valve 57 and the valve bore 19 ensures that fluid communication only occurs between the preparation chamber 5 and the dosing cups 61. It will further be appreciated that as the control valve 57 is rotated away from its first position, each of the dosing cups 61 will shear a lower portion of the full fluid sample volume, minimising disruption of the sediment of the fluid sample. It will further be appreciated that the volume of the dosing cups 61 is set to the required volume of the fluid sample to be delivered to each channel 31. In alternate embodiments the number of dosing cups may not equal the number of channels, with manifold systems, or the like, employed to distribute the fluid sample as required.

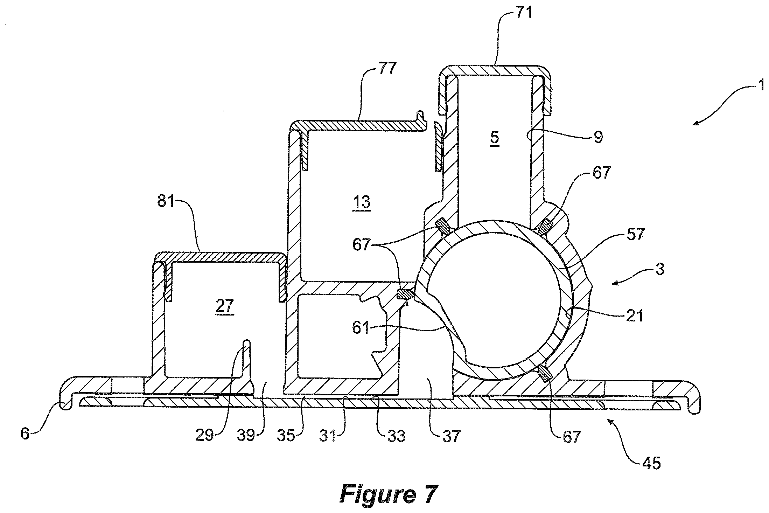

Referring now to Figure 7, where a cross-sectional view of the diagnostic device 1 is shown with the control valve 57 having been rotated (in a clock-wise direction) to a second position, where it can be seen that each dosing cup 61 is now inverted and aligned with the fluid inlet 37 of a respective channel 31. It will be appreciated that with the control valve 57 in the second position and each dosing cup 61 inverted and aligned with the fluid inlet 37 of a respective channel 31, the fluid sample is able to flow from each dosing cup 61 and into a respective channel 31 via the fluid inlet 37 of each channel 31.

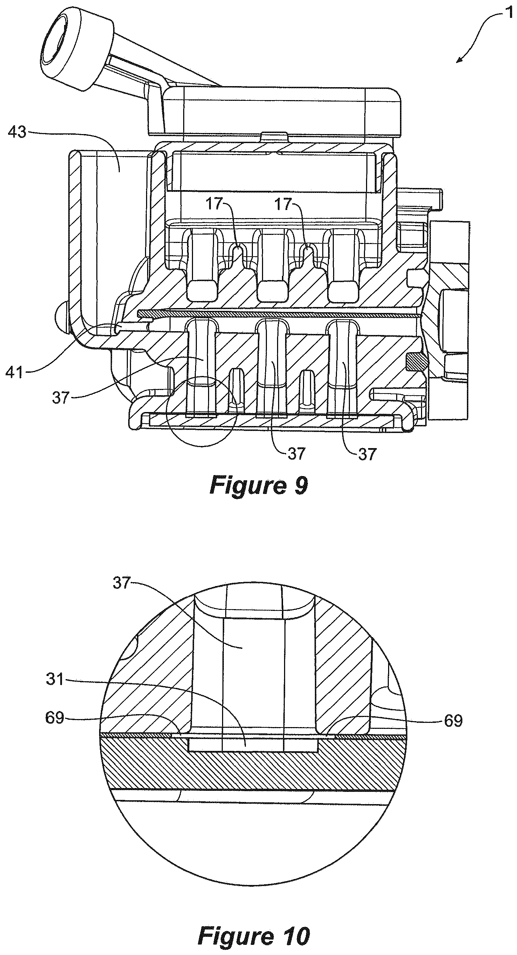

In order to reduce the capture of air bubbles, or hydraulic or pneumatic lock within each channel 31, and to encourage the transfer of the fluid sample from the dosing cups 61 to the channels 31, the diagnostic device 1 is further provided with a vent aperture 41 (as best shown in Figures 5 and 9) which allows each of the channel inlets 37 to vent to atmosphere at all times regardless of the control valve 57 position. The location of the vent aperture 41 is critical to ensure that reliable venting is achieved to ensure that the fluid sample does not enter or block the vent aperture 41. The device 1 also features a vent chamber 43, configured to capture any fluid that may inadvertently exit the vent aperture 41 during normal operation or in the event that there is a seal 67 failure in the device 1.

Referring to Figure 10, it can be seen that a recessed gutter 69 is formed between the upper and lower bodies 3, 45 along each channel 31 in order to act as a trap for bubbles and to keep other flow influencing geometry away from the imaging plane.

It will be appreciated that the presence of air bubbles within the channel 31 would reduce the available functional area within the channel 31 which is available to capture analyte from the fluid sample. Air bubbles also distort and interfere with optical measurement techniques and alter rinse flow characteristics within the channel 31. The advantage of preventing air bubbles from being captured in the channel 31 is that the device 1 maximises the analyte reaching the functional surface on the floor 33 of the channel 31, therefore increasing test sensitivity and negative predictive values, which are key performance indicators for diagnostic devices.

It will be appreciated that while the control valve 57 is in the second position, the seal 67 between the control valve 57 and the valve bore 19 ensures that fluid communication only occurs between the dosing cups 61 and the fluid inlets 37 of the channels 31.

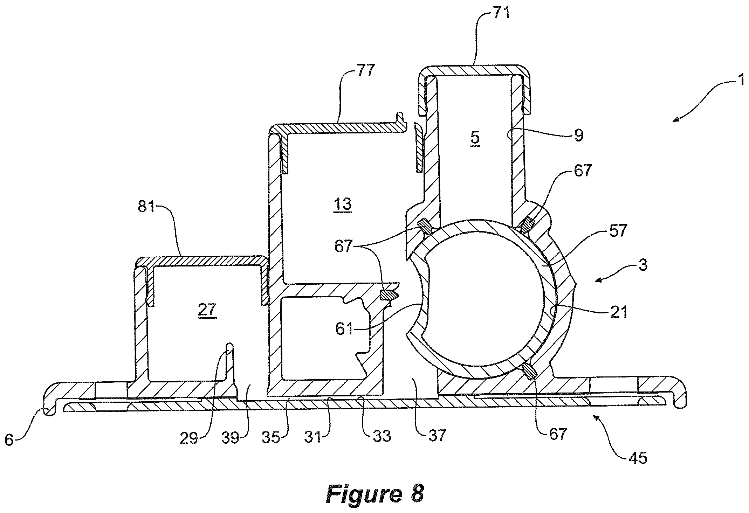

Referring now to Figure 8, where a cross-sectional view of the diagnostic device 1 is shown with the control valve 57 rotated to a third position, where it can be seen that each dosing cup 61 is oriented such that it becomes a conduit between corresponding fluid outlets 15 of the rinse reservoir 13 and the fluid inlet 37 of a respective channel 31.

It will be appreciated that with the control valve 57 in the third position, and each dosing cup 61 being oriented such that it becomes a conduit between a fluid outlet 15 of the rinse reservoir 13 and the fluid inlet 37 of a respective channel 31, such that rinse fluid from the rinse reservoir 13 is able to flow in to and through each channel 31 via a respective conduit and channel fluid inlet 37, where it will then exit each channel 31 via a respective fluid outlet 39 and collect in a waste sump 27. It will further be appreciated that by varying the degree of rotation of the control valve 57 as it becomes a conduit between the rinse reservoir 13 and the channels 31, that variable flow rates may be achievable if required.

The waste sump 27 features a weir 29, which, as will be appreciated, has a height set for the required volume of the fluid sample to be contained in each channel 31.

While the embodiment described features a rinse chamber 13, it will be appreciated that in some applications where the rinse volume, flow and fluid is not as critical as other applications, the remainder or the test sample may be suitable to be used as the rinse fluid, which results in a simpler process and device. Alternative methods of controlling and actuating the rinse depend on the requirements and sensitivity of the rinsing process. The current embodiment is gravity controlled, however other conditions may make use of external pressure or vacuum to control the flow of the rinse fluid.

As can be seen in Figure 9, the rinse reservoir 13 may also feature internal guides 17, configured to indicate to an operator when the required volume of rinse fluid has been added to the rinse reservoir 13.

It can be seen that the preparation chamber 5, rinse reservoir 13 and waste sump 27 each feature lids 71, 77, 81, reducing the risk of foreign contamination and protection from light exposure to the fluid sample and reagents. The preparation chamber lid 71 also features a port 73 which allows for a pipette or other device to deliver the fluid sample to the preparation chamber 5, and a cap 75 to be inserted into the port 73 when the port 73 is not in use. The lid, rinse reservoir and waste sump lids 71, 77, 81 also feature breathing vents 79, 83, 85.

The substrate in which the channels 31 are formed may take any suitable form and be made from any suitable material. Materials suitable for the manufacture of plates for microfluidic chips are known in the art and may be chosen based on considerations such as cost, inertness, optical properties, wettability, surface modification potential, bio-compatability, or reactivity toward fluids and other materials that will be in contact with the chip, etc. Some examples of suitable substrate materials include glass, quartz, metal (e.g. stainless steel, copper), silicon, and polymers. In certain embodiments, the substrate is a glass substrate. For example, Pyrex glass microfluidic chips may be suitable. Suitable polymeric substrates include polydimethylsiloxane (PDMS), polytetrafluoroethylene (PTFE), other perfluoropolyether (PFPE) based elastomers, polymethylmethacrylate (PMMA), silicone, Cyclic Olefin Polymper (COP) (and copolymers COC) and the like.

All materials are required to have bio-compatability (especially ctyo-toxicity) or compatability to specific analyte and specific reagents used within the diagnostic process. The upper body 3 is required to have optical properties that are absorbing or opaque (at given part thicknesses) to reduce exposure of contents to light, reducing photo bleaching of either analyte, reagent or modification surfaces, in order to optimise the signal and image for fluorescence microscopy. The lower body 45 requires very high transmission within the spectrums used for the fluorescence microscope imaging or other detection methods used, very low haze for image clarity and resistance to all additional functional and surface modification product, by products or processes required by the diagnostic device 1. The lower body 45 is required to have good wettability, ideally higher than the upper body 3 to promote flow out of the upper body 3. The control valve 57 is required to have a very low contact angle hysteresis, to promote ready flow of fluid sample of out the dosing cups 61, and low surface energy to reduce cell adhesion. It will be appreciated that material selection alone may not be used to achieve all of these characteristics, and that post surface modifications or coatings may be used to achieve and influence these characteristics.

The fluid contacting surfaces of the device 1 may be modified to minimise or prevent adsorption of particles to the surface. For example, inner surfaces may be modified with a chemical agent. Suitable chemical agents are known in the art and include, for example, polyethylene glycol), chlorosilanes, methoxysilanes, hydroxysilanes, and their amine, hydroxy, fluorine, carboxylic, derivatives, amine compounds, polyelectrolytes such as poly(methacrylic acid), poly(allylamine), poly(N-vinylpyrrolidone) etc. Alternatively, or in addition, an inner surface of one or more of the microchannels XX may be modified with nanostructures, such as nanoprotrusion or nanoholes. Methods for modifying microchannels are known in the art.

Optionally, fluid contacting surfaces of the device 1 may be formed from, lined or coated with hydrophilic material or hydrophobic material to encourage the fluid sample to transfer from the dosing cups 61 to their respective channels 31. For example, glass provides a relatively hydrophilic surface and is suitable for use with an aqueous stream whereas polytetrafluoroethylene provides a relatively hydrophobic surface.

The angle between the leading edge of the fluid inlet 37 of each channel 31 and dose cup 61 starts acute and opens up to near parallel. This enables the fluid sample surface in the dose cup 61 to be pierced by the leading edge of the fluid inlet 37, relieving any surface tension holding the fluid sample in the dosing cup 61 and then "pulled" away from the dosing cup 61 with the increasing angle difference of the surfaces as the dosing cup 61 is rotated over the fluid inlet 37. With the fluid inlet 37 being near vertical, gravity will assist to enable the fluid sample to make contact with an optionally hydrophilic surface of the channel 31 to completely remove the fluid sample from the fluid inlet 37. The difference of wettability and contact angle between the dosing cup 61, fluid inlet 37 and channel 31 are used to ensure that the material and/or surfaces are in ascending order of wettability (low advancing contact angles) ensuring a cascade of the fluid sample flow being pulled towards the channel 31. However, in addition, all geometrical features which pose a risk are placed parallel instead of across fluid sample flow.

A specific concentration of the primary reagent (for optimum selectivity of the analyte in the fluid sample) is to be placed and allowed to dry on a primary reagent surface 9 in the preparation chamber 5 at a location such that when the fluid sample enters the preparation chamber 5, when orientated by the preparation port 73 (or other features of the device) that the fluid sample is to make contact with the dry solution and dissolves within the fluid sample. The rate at which the fluid sample is to be added is to enable sufficient distribution of the reagent within the fluid sample.

For some instances different reagents require different periods of incubation within the specific test sample. Having different points of exposure enables this. In the case of a device configured for use in the bladder cancer detection method described in international patent WO2018187830A1, incubation of the primary reagent (ala-5) and secondary reagent (nuclei stain) have vastly different times. However over incubation of both reagents in the test sample is able to promote ala-5 uptake on other non-specific items within the test sample which are not the analyte being analysed. Secondary and tertiary reagents may be deposited anywhere within the test flow up until and including the channel, enabling various reagents to be added at various times and also in isolation from the channel if required. In the embodiment shown, the secondary reagent is deposited on the ceiling 35 of the channel. Another identified deposit location for a tertiary reagent is on a portion of the inner surface of the control valve bore 19 between the preparation chamber outlet 11 and the inlet of the channel 37, which the fluid sample will come in to contact with as the dosing cups 61 are rotated past.

At least part of an inner surface of one or more of the channels 31 is modified with a cell capture agent. The cell capture agent may be any inorganic or organic material that binds with some degree of specificity to a cell of interest. The cell capture agent may be bonded directly or indirectly to the substrate surface.

In certain embodiments, at least part of an inner surface (in this case, the floor 33) of one or more of the channels 31 is modified with a plasma polymerised polyoxazoline (PPOx) coating as described in published international patent application WO 2017/035566. The cell capture agent may be covalently or non-covalently bound to the POx coating using the methods described in WO 2017/035566. In certain embodiments, the cell capture agent is bioactive Epithelial Cell Adhesion molecule (EpCAM) anti-body. In certain embodiments, the device may 1 feature one selective capturing channel 31, one blocked channel 31 and one PPOx coated channel 31. The selective capturing channel has antibodies (of the specific antigen which is being used for specific capture/analysis) incubated and attached to the PPOX surface of the channel, following antibody incubation, all non-specific binding sites are then blocked by incubating a skim milk protein solution or alternate blocking solution to bind to all remaining non-specific sites. This yields a channel ready for selective capturing of the required analyte.

The block channel has all PPOx deposited binding sites bound with the same process as the selective capturing channel. The block channel is employed as a check that a successful block process has been employed and that adequate rinse has been performed on the device.

The PPOx channel has no further modifications beyond the PPOx deposition. The unspecific binding is used as a check that a successful coating has been employed and also that a test sample has been delivered to the channel and that the rinse process has not been excessive.

It is intended that once the diagnostic device 1 has been loaded with the fluid sample and rinsing solution, it will be able to be received by a reading device, which will perform all remaining aspects of the diagnostic process.

The reading device will feature an interface, capable of engaging and rotating the control valve 57. The reading device may be equipped with a means for mechanically agitating the diagnostic device 1. The reading device will also feature the necessary light sources, filters, and image capture equipment as required by the reagents to inspect the functional surfaces of the channels 31 and detect the presence of the relevant analyte. Certain embodiments of the reading device may include incubation facilities and means for locating the diagnostic device 1 for microscopy.

The diagnostic device 1 may be used to detect an analyte in a fluid sample using the following method.

A required amount of fluid sample is added to the preparation chamber 3 via the port 73 in the preparation chamber lid 71 (in either single delivery of full fluid sample or small metered amounts making up the full required volume). Upon entry, the fluid sample will dissolve the dry formed primary reagent. The preparation chamber cap 75 is replaced to close off the preparation chamber 3. Optional mechanical agitation may be required to ensure full distribution of the primary reagent in the preparation chamber 3. The required volume of rinse fluid is placed in the rinse reservoir 13, and the rinse reservoir lid 77 is placed on the rinse reservoir 13.

The device 1 is incubated for the required time and temperature for the primary reagent. Optional mechanical agitation may also be employed throughout incubation to reduce cell loss from adhesion to internal surfaces. At the required time, the control valve 57 is actuated and turned to the second position, allowing the fluid sample to flow from the dosing cups 61, through the fluid inlets 37 and in to the channels 31.

The fluid sample is allowed to incubate in the channels 31 for the purposes of allowing the secondary reagent to take affect and for the fluid sample to have adequate exposure to the functionalised surface in the channels 31. An optional pre-rinse inspection may be performed during the incubation period. Optional mechanical agitation may occur at intervals to allow for even distribution of the fluid sample throughout the channels 31. At the required time, the control valve 57 is actuated and turned to the third position, allowing the rinse solution to flow through the channels 31 as required, with all excess fluid sample and rinse solution captured in the waste sump 27.

The functionalised surfaces of the channels 31 are then inspected as required by the reagents for processing and analyte detection.

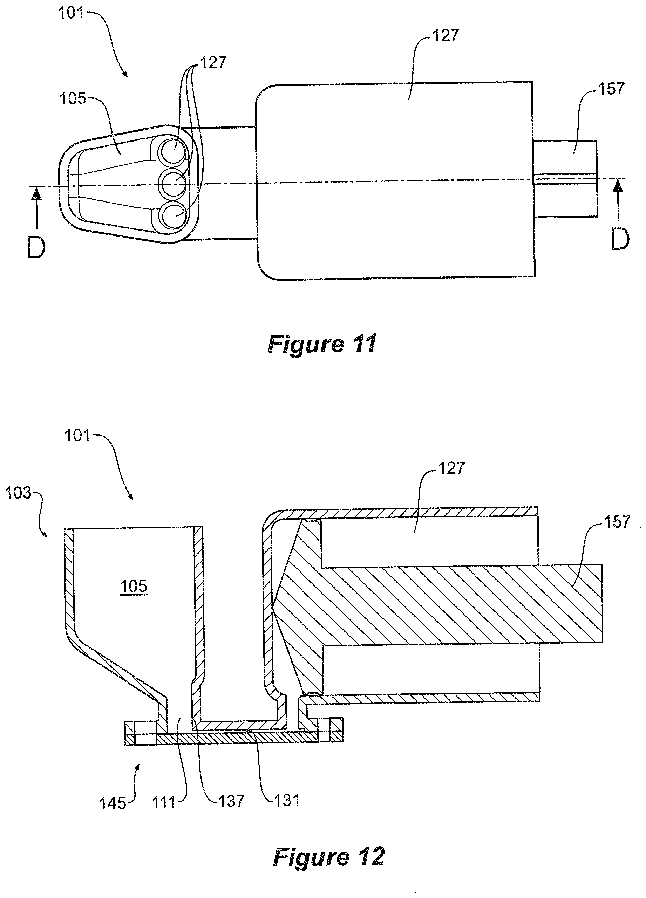

Referring now to Figures 11 and 12 where there is shown a diagnostic device 101 according to an alternative embodiment. Similarly to the device shown in Figures 1 to 10, the diagnostic device 101 comprises an upper 103 and lower body 145, with three covered channels 131 being formed between the upper and lower bodies 103, 145 respectively. The device 101 comprises a preparation chamber 105 which reduces in cross section down to three fluid outlets 111, each corresponding to a respective channel 131. It will be appreciated that by virtue of the geometry of the preparation chamber 105, the cells will settle on a meniscus suspended above the inlet 137 of each channel 131. It will further be appreciated that this is advantageous as the cells do not have a solid surface to adhere to, during settling and incubation.

The fluid control means is in the form of a plunger 157 located within the waste sump 127, where the plunger 157 is used to create a vacuum, drawing the fluid sample from the preparation chamber 105 in to each channel 131. It will be appreciated that the plunger 157 may be externally operated by a reader device to input a displacement corresponding to the delivery of a required volume of fluid sample. This particular device does not have a rinse reservoir, instead the remainder of the fluid sample is used as the rinse fluid. After the required incubation period, the plunger 157 will be operated to input a displacement corresponding to the delivery of a required volume of rinse fluid. It will be appreciated that the rate at which the plunger 157 is operated may be modified to achieve suitable flow rates of rinse fluid.

It will be appreciated that some of the advantages of having a self-contained unit, are that it reduces the need for skilled operators, as well as reducing operator to operator variances and errors, and requires no operator interaction once the device is loaded with fluids and placed within the reading device.

In the context of the claimed invention, the diagnostic device comprises microfluidic features. The channels are microchannels.

However it will be appreciated that alternative embodiments not forming part of the claimed invention may not comprise microfluidic features or microchannels. As used herein, the term "microfluidic", and variants thereof, means that the chip, device, apparatus, substrate or related apparatus contains fluid control features that have at least one dimension that is sub-millimetre and, typically less than 100 µm, and greater than 1 µm. Furthermore, the term "microchannel", and variants thereof, means a channel having at least one dimension that is sub-millimetre and, typically less than 100 µm, and greater than 1 µm.

The or each channel may be formed in any substrate or apparatus that can be used for the manipulation of fluids on a micro-scale. The device 1 can be used to perform a variety of chemical and biological analytical and chemical techniques. Devices of this type are often referred to as "microchips" and may be fabricated from plastic, glass, silicon, metal, with the channel being etched, machined or injection molded into individual substrates.

The channels can have any cross-sectional shape (circular, oval, triangular, irregular, square, rectangular, or the like). The dimensions of the channels 31 are chosen such that fluid is able to freely flow through device and that the required flow characteristics are achieved. The number of channels and the shape of the channels can be varied by any method known to the person skilled in the art. Variations of the size, shape and/or configuration of the channels from those described are also envisaged. For example, the microchannels may be from 1 µm to 1000 µm in depth or width. The size of the microchannels may also differ from one another in both dimensions.

The channels are formed on the lower body and that plate is then capped with the upper body to form the covered channels. Methods for forming fluid microchannel networks are known in the art. For example, the microchips can be fabricated using standard photolithographic and etching procedures including soft lithography techniques (e.g. see Shi J., et al., Applied Physics Letters 91 , 153114 (2007); Chen Q., et al., Journal of Microelectromechanical Systems, 16, 1 193 (2007); or Duffy et al., Rapid Prototyping of Microfluidic Systems in Poly(dimethylsiloxane), Anal. Chem., 70 (23), 4974-4984 (1998)), such as near-field phase shift lithography, microtransfer molding, solvent-assisted microcontact molding, microcontact printing, and other lithographic microfabrication techniques employed in the semiconductor industry. Direct machining or forming techniques may also be used as suited to the particular substrate. Such techniques may include hot embossing, cold stamping, injection moulding, direct mechanical milling, laser etching, chemical etching, reactive ion etching, physical and chemical vapour deposition, and plasma sputtering. The particular methods used will depend on the function of the particular microfluidic network, the materials used as well as ease and economy of production.

While the present disclosure details the detection of bladder cancer in urine, it will be appreciated that it may equally be applied to the detection of other cancerous biomarkers or analytes expressing a particular antigen of the capturing antibody.

Throughout the specification and the claims that follow, unless the context requires otherwise, the words "comprise" and "include" and variations such as "comprising" and "including" will be understood to imply the inclusion of a stated integer or group of integers, but not the exclusion of any other integer or group of integers.

The reference to any prior art in this specification is not, and should not be taken as, an acknowledgement of any form of suggestion that such prior art forms part of the common general knowledge.

It will be appreciated by those skilled in the art that the invention is not restricted in its use to the particular application described. Neither is the present invention restricted in its preferred embodiment with regard to the particular elements and/or features described or depicted herein. It will be appreciated that the invention is not limited to the embodiment or embodiments disclosed, but is capable of numerous rearrangements, modifications and substitutions without departing from the scope of the invention as set forth and defined by the following claims.

### REFERENCE SIGN LIST

- 1: device
- 3: upper body
- 4: lower surface
- 5: preparation chamber
- 6: flange
- 7: discrete wells
- 9: reagent surface
- 11: fluid outlet
- 13: rinse reservoir
- 15: fluid outlet
- 17: internal guide
- 19: valve bore
- 23: position markers
- 25: locating hole
- 27: waste sump
- 29: weir
- 31: covered channel
- 33: floor
- 35: ceiling
- 37: inlet apertures
- 39: outlet apertures, fluid outlets
- 41: vent aperture
- 43: vent chamber
- 45: lower body
- 47: elongate recessed section
- 49: locating hole
- 51: adhesive layer
- 53: complementary cut-outs
- 55: locating holes
- 57: fluid control valve
- 59: cylindrical body
- 61: dosing cups
- 63: machine interface
- 65: marker
- 67: seal member
- 69: recessed gutter
- 71: lid
- 73: port
- 75: cap
- 77: reservoir lid
- 79: vent
- 81: lid
- 83: vent
- 85: vent
- 101: diagnostic device
- 103: upper body
- 105: preparation chamber
- 111: fluid outlet
- 127: waste sump
- 131: covered channel
- 137: inlet
- 145: lower body
- 157: plunger

## Claims

1. A diagnostic device (101) for determining the presence of a target analyte in a fluid sample, comprising:
a first fluid source;
at least one covered channel (31); and
fluid control means, configured to transfer a specific volume of fluid from the first fluid source to the or each covered channel (31),
wherein
the first fluid source is provided in the form of a preparation chamber (5, 105);
**characterized by**
a microfluid device (1) which comprises the first fluid source, the at least one covered channel (31) and the fluid control means, wherein
the at least one covered channel (31, 131) is provided in the form of a microchannel, wherein the or each microchannel comprises a fluid inlet (37, 137) and a fluid outlet (39) and a capture surface for selective capture of the target analyte;
the microfluidic device (1) further comprises a second fluid source, wherein the fluid control means is also configured to form a conduit between the second fluid source and the or each covered channel (31); and
the microfluidic device (1) further comprises a waste sump (27) in fluid communication with the or each channel (31).

2. The diagnostic device (101) as claimed in claim 1, wherein
the second fluid source comprises a rinse reservoir (13), which preferably is arranged adjacent to the preparation chamber (5), and/or
the fluid control means comprises a fluid control valve (57).

3. The diagnostic device (101) as claimed in claim 2, wherein
the fluid control valve (57) has a generally cylindrical body (59), and/or
the fluid control valve (57) is received within a generally cylindrical valve bore (19) in the device, and/or
the fluid control valve (57) further comprises a machine interface (63) for transferring rotational movement from a machine to the valve.

4. The diagnostic device (101) as claimed in claim 3, wherein
the valve bore (19) is in fluid communication with the first fluid source and the or each channel (31), and/or
the valve bore (19) is in fluid communication with the second fluid source, and/or
a seal member (67) is disposed within the valve bore (19) configured to create a fluid seal between the control valve (57) and the valve bore (19).

5. The diagnostic device (101) as claimed in any of the preceding claims, wherein
the microchannel, comprising the fluid inlet (37, 137), the fluid outlet (39) and the capture surface, is provided by a channel ceiling (35).

6. The diagnostic device (101) as claimed in any one of the claims 1 to 4, wherein
at least part of an inner surface of one or more of the channels (31) is modified with a cell capture agent,
wherein the cell capture agent is an inorganic or organic material that binds with some degree of specificity to a cell of interest, and the cell capture is bonded directly or indirectly to the substrate surface, and/or
at least part of an inner surface in form of the floor (33) of one or more of the channels (31) is modified with a plasma polymerised polyoxazoline (PPOx) coating.

7. The diagnostic device (101) as claimed in claim 6, wherein
the cell capture agent is covalently or non-covalently bound to the POx coating, and/or
the cell capture agent is bioactive Epithelial Cell Adhesion molecule (EpCAM) anti-body.

8. The diagnostic device (101) as claimed in claim 3 or 4, wherein
the fluid control valve (57) comprises a cup (61) corresponding to the or each channel (31) formed in the generally cylindrical body (59) of the control valve (57), wherein
• when the control valve (57) is in a first position, the or each cup (61) is in fluid communication with the first fluid source, or
• when the control valve (57) is rotated to a second position, the or each cup (61) is in fluid communication with the or each corresponding channel (31), preferably being provided in form of a microchannel, or
• when the control valve (57) is rotated to a third position, the or each cup (61) creates a conduit between the second fluid source and the or each channel (31) such that the second fluid source and the or each channel (31) are in fluid communication.

9. The diagnostic device as claimed in any one of the preceding claims, wherein
the preparation chamber (5, 105) comprises a fluid inlet, and at least one fluid outlet (11, 111), and/or
the preparation chamber (5, 105) comprises a fluid outlet (11, 111) corresponding to the or each channel (31, 131).

10. The diagnostic device as claimed in any one of the preceding claims, wherein
the cross-sectional area of the preparation chamber (5, 105) reduces from the fluid inlet toward the or each fluid outlet (11, 111), or
the preparation chamber (5, 105) reduces in cross section down to at least one discrete well (7) in the base of the chamber, corresponding to the fluid inlet of the or each channel (31, 131), wherein the or each well (7) comprises a fluid outlet (11, 111).

## Patentansprüche

1. Diagnosevorrichtung (101) zum Bestimmen des Vorliegens eines Zielanalyten in einer Fluidprobe, umfassend:
eine erste Fluidquelle;
mindestens einen abgedeckten Kanal (31); und
Fluidregelungsmittel, die dazu ausgestaltet sind, ein spezifisches Fluidvolumen von der ersten Fluidquelle zu dem einen oder zu jedem abgedeckten Kanal (31) zu übertragen,
wobei
die erste Fluidquelle in Form einer Vorbereitungskammer (5, 105) bereitgestellt ist;
**gekennzeichnet durch**
eine Mikrofluidvorrichtung (1), die die erste Fluidquelle, den mindestens einen abgedeckten Kanal (31) und das Fluidsteuerungsmittel umfasst, wobei der mindestens eine abgedeckte Kanal (31, 131) in Form eines Mikrokanals bereitgestellt ist, wobei der oder jeder Mikrokanal einen Fluideinlass (37, 137) und
einen Fluidauslass (39) und eine Fangfläche zum selektiven Abfangen des Zielanalyten umfasst;
die Mikrofluidvorrichtung (1) ferner eine zweite Fluidquelle umfasst, wobei das Fluidsteuerungsmittel auch dazu ausgestaltet ist, eine Leitung zwischen der zweiten Fluidquelle und dem oder jedem abgedeckten Kanal (31) auszubilden; und
die Mikrofluidvorrichtung (1) ferner einen Abfallsammelbehälter (27) umfasst, der mit dem oder jedem Kanal (31) in Fluidverbindung steht.

2. Diagnosevorrichtung (101) nach Anspruch 1, wobei
die zweite Fluidquelle ein Spülreservoir (13) umfasst, das vorzugsweise benachbart zu der Vorbereitungskammer (5) angeordnet ist, und/oder
das Fluidsteuerungsmittel ein Fluidsteuerungsventil (57) umfasst.

3. Diagnosevorrichtung (101) nach Anspruch 2, wobei
das Fluidsteuerungsventil (57) einen allgemein zylindrischen Körper (59) aufweist und/oder
das Fluidsteuerungsventil (57) innerhalb einer allgemein zylindrischen Ventilbohrung (19) in der Vorrichtung aufgenommen ist und/oder
das Fluidsteuerungsventil (57) ferner eine Maschinenschnittstelle (63) zum Übertragen von Drehbewegung von einer Maschine zu dem Ventil umfasst.

4. Diagnosevorrichtung (101) nach Anspruch 3, wobei
die Ventilbohrung (19) mit der ersten Fluidquelle und dem oder jedem Kanal (31) in Fluidverbindung steht und/oder
die Ventilbohrung (19) mit der zweiten Fluidquelle in Fluidverbindung steht und/oder
ein Dichtungselement (67) innerhalb der Ventilbohrung (19) angeordnet ist, das dazu ausgestaltet ist, eine Fluiddichtung zwischen dem Steuerungsventil (57) und der Ventilbohrung (19) herzustellen.

5. Diagnosevorrichtung (101) nach einem der vorangehenden Ansprüche, wobei der Mikrokanal, der den Fluideinlass (37, 137), den Fluidauslass (39) und die Auffangfläche umfasst, durch eine Kanaldecke (35) bereitgestellt ist.

6. Diagnosevorrichtung (101) nach einem der Ansprüche 1 bis 4, wobei
mindestens ein Teil einer inneren Fläche von einem oder mehreren der Kanäle (31) mit einem Zellfangmittel modifiziert ist,
wobei das Zellfangmittel ein anorganisches oder organisches Material ist, das sich mit einem gewissen Spezifizitätsgrad an eine interessierende Zelle bindet, und das Zellfangmittel unmittelbar oder mittelbar an die Substratfläche gebunden ist, und/oder
mindestens ein Teil einer inneren Fläche in Form des Bodens (33) von einem oder mehreren der Kanäle (31) mit einer plasmapolymerisierten Polyoxazolin-Beschichtung (PPOx-Beschichtung) modifiziert ist.

7. Diagnosevorrichtung (101) nach Anspruch 6, wobei
das Zellfangmittel kovalent oder nichtkovalent an die POx-Beschichtung gebunden ist und/oder
das Zellfangmittel ein bioaktiver epitheliales-Zelladhäsionsmolekül-Antikörper (EpCAM-Antikörper) ist.

8. Diagnosevorrichtung (101) nach Anspruch 3 oder 4, wobei
das Fluidsteuerungsventil (57) eine Mulde (61) umfasst, die dem oder jedem Kanal (31) entspricht und die in dem allgemein zylindrischen Körper (59) des Steuerungsventils (57) ausgebildet ist, wobei
• wenn das Steuerungsventil (57) in einer ersten Stellung ist, die oder jede Mulde (61) mit der ersten Fluidquelle in Fluidverbindung steht oder
• wenn das Steuerungsventil (57) in eine zweite Stellung gedreht ist, die oder jede Mulde (61), vorzugsweise in Form eines Mikrokanals bereitgestellt, mit dem oder jedem entsprechenden Kanal (31) in Fluidverbindung steht oder
• wenn das Steuerungsventil (57) in eine dritte Stellung gedreht ist, die oder jede Mulde (61) eine Leitung zwischen der zweiten Fluidquelle und dem oder jedem Kanal (31) herstellt, sodass die zweite Fluidquelle und der oder jeder Kanal (31) in Fluidverbindung stehen.

9. Diagnosevorrichtung nach einem der vorangehenden Ansprüche, wobei
die Vorbereitungskammer (5, 105) einen Fluideinlass und mindestens einen Fluidauslass (11, 111) umfasst und/oder
die Vorbereitungskammer (5, 105) einen Fluidauslass (11, 111) umfasst, der dem oder jedem Kanal (31, 131) entspricht.

10. Diagnosevorrichtung nach einem der vorangehenden Ansprüche, wobei
die Querschnittsfläche der Vorbereitungskammer (5, 105) von dem Fluideinlass zu dem oder jedem Fluidauslass (11, 111) hin abnimmt oder
die Vorbereitungskammer (5, 105) im Querschnittkleiner wird, bis hinunter zu mindestens einer einzelnen Vertiefung (7) in der Grundfläche der Kammer, die dem Fluideinlass von dem oder jedem Kanal (31, 131) entspricht, wobei die oder jede Vertiefung (7) einen Fluidauslass (11, 111) umfasst.

## Revendications

1. Dispositif de diagnostic (101) pour déterminer la présence d'un analyte cible dans un échantillon de fluide, comprenant :
une première source de fluide ;
au moins un canal couvert (31) ; et
un moyen de contrôle de fluide, conçu pour transférer un volume spécifique de fluide de la première source de fluide au canal ou à chaque canal couvert (31),
la première source de fluide étant fournie sous la forme d'une chambre de préparation (5, 105) ;
**caractérisé par**
un dispositif microfluidique (1) qui comprend la première source de fluide, l'au moins un canal couvert (31) et le moyen de contrôle de fluide,
l'au moins un canal couvert (31, 131) étant fourni sous la forme d'un microcanal, le microcanal ou chaque microcanal comprenant une admission de fluide (37, 137) et une sortie de fluide (39) et une surface de capture pour la capture sélective de l'analyte cible ;
le dispositif microfluidique (1) comprenant en outre une deuxième source de fluide, le moyen de contrôle de fluide étant également conçu pour former un conduit entre la deuxième source de fluide et le canal ou chaque canal couvert (31) ; et
le dispositif microfluidique (1) comprenant en outre un carter de vidange (27) en communication fluidique avec le canal ou chaque canal (31).

2. Dispositif de diagnostic (101) selon la revendication 1,
la deuxième source de fluide comprenant un réservoir de rinçage (13) lequel est disposé de préférence de façon adjacente à la chambre de préparation (5), et/ou
le moyen de contrôle de fluide comprenant une vanne de régulation de fluide (57).

3. Dispositif de diagnostic (101) selon la revendication 2,
la vanne de régulation de fluide (57) ayant un corps généralement cylindrique (59), et/ou
la vanne de régulation de fluide (57) étant accueillie dans un alésage de vanne généralement cylindrique (19) dans le dispositif, et/ou
la vanne de régulation de fluide (57) comprenant en outre une interface machine (63) pour transmettre le mouvement de rotation d'une machine à la vanne.

4. Dispositif de diagnostic (101) selon la revendication 3,
l'alésage de vanne (19) étant en communication fluidique avec la première source de fluide et le canal ou chaque canal (1), et/ou
l'alésage de vanne (19) étant en communication fluidique avec la deuxième source de fluide, et/ou
un élément d'étanchéité (67) étant disposé dans l'alésage de vanne (19) conçu pour créer un joint étanche aux fluides entre la vanne de régulation (57) et l'alésage de vanne (19).

5. Dispositif de diagnostic (101) selon l'une quelconque des revendications précédentes,
le microcanal comprenant l'admission de fluide (37, 137), la sortie de fluide (39) et la surface de capture étant fourni par un plafond de canal (35).

6. Dispositif de diagnostic (101) selon l'une quelconque des revendications 1 à 4,
au moins une partie d'une surface intérieure d'un ou plusieurs canaux (31) étant modifiée avec un agent de capture de cellules, l'agent de capture de cellules étant un matériau inorganique ou organique qui se lie avec un certain degré de spécificité à une cellule présentant un intérêt, et la capture de cellules étant liée directement ou indirectement à la surface de substrat, et/ou
au moins une partie d'une surface intérieure ayant la forme du fond (33) d'un ou plusieurs des canaux (31) étant modifiée avec un revêtement de polyoxazoline polymérisé par plasma (PPOx).

7. Dispositif de diagnostic (101) selon la revendication 6,
l'agent de capture de cellules étant lié de façon covalente ou non covalente au revêtement POx, et/ou
l'agent de capture de cellules étant un anticorps de molécule d'adhésion de cellule épithéliale (EpCAM) bioactif.

8. Dispositif de diagnostic (101) selon la revendication 3 ou 4,
la vanne de contrôle de fluide (57) comprenant une cuvette (61) correspondant au canal ou à chaque canal (31) formé dans le corps généralement cylindrique (59) de la vanne de régulation (57),
• lorsque la vanne de régulation (57) est dans une première position, la cuvette ou chaque cuvette (61) étant en communication fluidique avec la première source de fluide, ou
• lorsque la vanne de régulation (57) est pivotée dans une deuxième position, la cuvette ou chaque cuvette (61) étant en communication fluidique avec le canal ou chaque canal (31) correspondant, étant fourni de préférence sous la forme d'un microcanal, ou
• lorsque la vanne de régulation (57) est pivotée dans une troisième position, la cuvette ou chaque cuvette (61) créant un conduit entre la deuxième source de fluide et le canal ou chaque canal (31) de telle sorte que la deuxième source de fluide et le canal ou chaque canal (31) sont en communication fluidique.

9. Dispositif de diagnostic selon l'une quelconque des revendications précédentes, la
chambre de préparation (5, 105) comprenant une admission de fluide, et au moins une sortie de fluide (11, 111), et/ou
la chambre de préparation (5, 105) comprenant une sortie de fluide (11, 111) correspondant au canal ou à chaque canal (31, 131).

10. Dispositif de diagnostic selon l'une quelconque des revendications précédentes,
la section transversale de la chambre de préparation (5, 105) diminuant de l'admission de fluide vers la sortie de fluide ou chaque sortie de fluide (11, 111), ou
la section transversale de la chambre de préparation (5, 105) diminuant en formant au moins un puits discret (7) dans la base de la chambre, correspondant à l'admission de fluide du canal ou de chaque canal (31, 131), le puits ou chaque puits (7) comprenant une sortie de fluide (11, 111).
